Europäisches Patentamt

European Patent Office

Office européen des brevets

(11) Veröffentlichungsnummer: **0 381 855**
**A2**

## (12) EUROPÄISCHE PATENTANMELDUNG

(21) Anmeldenummer: 89123778.6

(22) Anmeldetag: 22.12.89

(51) Int. Cl.⁵: **F02P 11/06**

(30) Priorität: 07.02.89 DE 3903566

(43) Veröffentlichungstag der Anmeldung:
**16.08.90 Patentblatt 90/33**

(84) Benannte Vertragsstaaten:
**DE FR GB SE**

(71) Anmelder: **ROBERT BOSCH GMBH**
**Postfach 10 60 50**
**D-7000 Stuttgart 10(DE)**

(72) Erfinder: **Denz, Helmut, Dipl.-Ing.**
**Friedrich-Ebert-Strasse 59**
**D-7000 Stuttgart 1(DE)**
Erfinder: **Herden, Werner, Dr.-Dipl.-Ing.**
**Kappelweg 7**
**D-7016 Gerlingen(DE)**

(54) **Vorrichtung zur Erkennung von Zündaussetzern.**

(57) Es wird eine Vorrichtung zur Erkennung von Zündaussetzern an Brennkraftmaschinen, insbesondere Otto-Motoren vorgeschlagen, die mit einem die Zündaussetzer erfassenden Detektor versehen ist, der an eine Auswerteschaltung angeschlossen ist. Die Vorrichtung zeichnet sich dadurch aus, daß der Detektor (9) ein dem Auslaßventil des Zylinders (3), in Strömungsrichtung gesehen, nachgeordneter Druckgradientenempfänger (10) ist. Dieser kann vorzugsweise als Mikrofon ausgebildet und mittels eines Druckübertragungsrohrs (8) an das Sammelrohr (6) eines Auslaßkrümmers (4) der Brennkraftmaschine (1) angeschlossen sein. Durch das Druckübertragungsrohr wird das Mikrofon so vom Auslaßkrümmer entkoppelt, daß keine Körperschallübertragung stattfindet.

EP 0 381 855 A2

## Vorrichtung zur Erkennung von Zündaussetzern

Stand der Technik

Die Erfindung betrifft eine Vorrichtung zur Erkennung von Zündaussetzern an Brennkraftmaschinen, insbesondere Otto-Motoren nach der Gattung des Hauptanspruchs.

Derartige Vorrichtungen werden dazu verwendet, Zündaussetzer zu detektieren, derart, daß bei ihrem Auftreten Maßnahmen zum Schutze der Brennkraftmaschine bzw. ihrer Komponenten getroffen werden können. So ist es beispielsweise sinnvoll, beim Auftreten von Zündaussetzern die Kraftstoffzufuhr zur Brennkraftmaschine zu unterbrechen, um ein "Absaufen" zu vermeiden; einhergehend sind damit auch Maßnahmen zur Verhinderung von Katalysatorschäden getroffen.

Aus der Brennkraftmaschinentechnik ist es bekannt Zündaussetzer durch Detektion von Zündspannung bzw. Zündstrom zu erfassen. Diese Methode hat den Nachteil, daß auch außerhalb des Brennraumes der Brennkraftmaschine überspringende Funken zur Detektion von vermeintlichen Zündströmen führen, was als positive Funktion, also einwandfreie Zündung, interpretiert wird. Demgemäß erkennt diese bekannte Vorrichtung nicht alle Fehlerfälle.

Überdies ist es bekannt, eine oder mehrere λ-Sonden für die Überwachung des Zündzustandes der Brennkraftmaschine einzusetzen. Zündaussetzer führen zu einer Veränderung der Zusammensetzung des Abgasgemisches, die von der λ-Sonde erfaßt wird. Weitere bekannte Verfahren bestehen in der Auswertung von Signalen von Brennraumsensoren in jedem Zylinder. Nachteil dieser Lösungen ist der relativ hohe Preis.

Vorteile der Erfindung

Die erfindungsgemäße Vorrichtung mit den im Hauptanspruch genannten Merkmalen hat dem gegenüber den Vorteil, daß tatsächlich nur ausgefallene Verbrennungen erkannt werden, das heißt, außerhalb des Brennraumes auftretende Funken führen nicht zum Ansprechen des Detektors. Durch die Erfindung werden somit nicht nur Funktionsausfälle erkannt, die auf fehlende Zündfunken zurückzuführen sind, sondern auch beim Vorhandensein eines Zündfunkens aber dem Fehlen einer Verbrennung (beispielsweise mangels Kraftstoff aufgrund einer defekten Kraftstoffzufuhr) wird diese Störung erkannt. Durch den Einsatz eines dem Auslaß ventil jedes Zylinders - in Strömungsrichtung gesehen - nachgeordneten Druckgradientenempfängers erfolgt die Detektion von Zündaussetzern durch Interpretation der Schallereignisse der Brennkraftmaschine, das heißt, es wird der durch den Druckunterschied zwischen Brennraum und Auspuff beim Öffnen des Auslaßventiles entstehende Druckstoß, der als allgemein bekanntes "Knallen" bei defekter Auspuffanlage hörbar ist, von dem Detektor erfaßt und ausgewertet. Bei ausfallender Zündung, z.B. durch das Auftreten von Zündaussetzern, fehlt dieser Druckstoß bzw. er liegt nicht in der üblichen Intensität vor, so daß der als Druckgradientenempfänger ausgebildete Detektor diese Veränderung erfassen kann.

Vorzugsweise ist der Druckgradientenempfänger als Mikrophon ausgebildet. Demgemäß liegt eine preiswerte Lösung vor und es ist eine schnelle Ansprache sichergestellt.

Eine bevorzugte Ausgestaltung besteht darin, daß der Druckgradientenempfänger dem Sammelrohr des Auslaßkrümmers der Brennkraftmaschine zugeordnet ist. Demgemäß werden sämtliche Schallereignisse im Hinblick auf das Öffnen der Auslaßventile sämtlicher Zylinder der Brennkraftmaschine erfaßt, so daß nur ein einziger Detektor erforderlich ist. Alternativ hierzu ist es grundsätzlich auch möglich, jedem Zylinder einen Druckgradientenempfänger zuzuordnen.

Zur Entkopplung von Körperschall sowie zur Vermeidung von Temperaturbelastungen des Druckgradientenempfängers ist der Einsatz eines Drucktübertragungsrohres vorteilhaft, das einerseits mit dem Sammelrohr des Auslaßkrümmers verbunden ist und andererseits zum Druckgradientenempfänger führt. Bei dem Drucktübertragungsrohr kann es sich um ein relativ dünnes Rohr handeln, daß nach dem Prinzip eines Stethoskops mit dem Auslaßkrümmer verbunden ist. Über das Drucktübertragungsrohr wird der Schallknall beim Öffnen des Auslaßventiles zum Druckgradientenempfänger übertragen. Der Druckgradientenempfänger befindet sich somit im hinreichenden Abstand vom Auslaßkrümmer und demgemäß an einer unkritischen Stelle.

Die Anordnung kann ferner so getroffen sein, daß der Ausgang des Druckgradientenempfängers kurbel- oder nockenwellensynchron im Zeitintervall des jeweils öffnenden Auslaßventils abgefragt wird. Diese Maßnahme läßt einwandfrei erkennen, ob das Schallereignis eines bestimmten Zylinders fehlt, da für jeden einzelnen Zylinder der jeweilige Zündzeitpunkt im Hinblick auf die zugeordnete Stellung der Kurbelbzw. Nockenwelle bekannt ist. Demgemäß ist eine eindeutige Aussage nicht nur darüber möglich, ob eine Verbrennung in irgendeinem Zylinder stattgefunden hat oder nicht, sondern es ist sogar möglich, eine Störung im Hinblick auf den jeweils betroffenen Zylinder anzuzeigen.

Eine Mehrzylinderversion der Brennkraftmaschine ist erfindungsgemäß vorzugsweise mit einer Auswerteschaltung versehen, die eine detektorgesteuerte Zählschaltung zur Identifizierung der einzelnen Zylinder aufweist. Demgemäß läßt sich die Erkennung der einzelnen Zylinder mittels dieser einfachen Zählschaltung realisieren.

Bevorzugt ist vorgesehen, daß die Auswerteschaltung bei auftretenden Zündaussetzern die Einspritzung, vorzugsweise des betroffenen Zylinders abschaltet und/oder ein Kontrollsignal aktiviert.

## Zeichnung

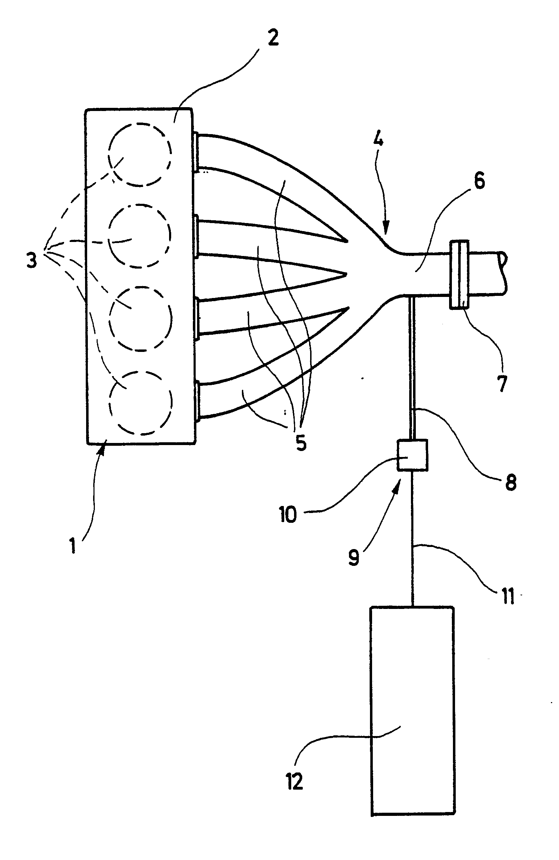

Die Erfindung wird im folgenden anhand der Figur näher erläutert.

Die Figur zeigt eine schematische Ansicht einer als Vierzylindermotor ausgebildeten Brennkraftmaschine, an deren Auslaßkrümmer ein Druckgradientenempfänger mittels eines Druckübertragungsrohres angeschlossen ist.

## Beschreibung des Ausführungsbeispiels

Die dargestellte Brennkraftmaschine 1 besitzt einen Motorblock 2, der vier einzelne Zylinder 3 umfaßt. Die nicht dargestellten Auslaßventile der einzelnen Zylinder 3 führen zu einem Auslaßkrümmer 4. Die einzelnen, von den Zylindern 3 kommenden Krümmerrohre 5 des Auslaßkrümmers 4 vereinigen sich in einem Sammelrohr 6. Das Sammelrohr 6 führt über eine Flanschverbindung 7 zur hier nicht dargestellten Auspuffanlage der Brennkraftmaschine 1.

An das Sammelrohr 6 des Auslaßkrümmers 4 ist ein Druckübertragungsrohr 8 angeschlossen, das zu einem Detektor 9 führt, der als Druckgradientenempfänger 10 ausgebildet ist. Vorzugsweise handelt es sich bei dem Druckgradientenempfänger 10 um ein Mikrophon, durch welches das breite Frequenzspektrum des bei erfolgter Zündung beim Öffnen des Auslaßventils einer der Zylinder 3 entstehenden Schallereignisses auf kostengünstige Weise registrier- und auswertbar ist. Bei dem Druckübertragungsrohr 8 kann es sich um ein relativ dünnes Metallrohr handeln, das gegebenenfalls durch geeignete Mittel vom Auslaßkrümmer 4 derart entkoppelt ist, daß zum Druckgradientenempfänger 10 keine Körperschalleitung erfolgt. Das Schallereignis wird vielmehr durch das sich innerhalb des Auslaßkrümmers 4 und auch des Druckübertragungsrohres 8 befindliche Gasmedium übertragen.

Der Druckgradientenempfänger 10 steht über eine elektrische Leitung 11 mit einer Auswerteschaltung 12 in Verbindung, die eine entsprechende Elektronik aufweist und gegebenenfalls mit einer Einspritzanlage der Brennkraftmaschine 1 zusammenwirken kann.

Die Auswerteschaltung 12 weist eine nicht dargestellte Zählschaltung auf, mit deren Hilfe kurbel- oder nockenwellensynchron im Zeitintervall des jeweils öffnenden Auslaßventiles der einzelnen Zylinder 3 der Ausgang des Druckgradientenempfängers 10 über die Leitung 11 abgefragt wird. Hierbei ist gegebenenfalls eine Laufzeit der Druckwelle bis zum Druckgradientenempfänger zu berücksichtigen. Vorteilhaft ist die Realisierung eines drehzahlabhängigen Winkelsegments für jeden Zylinder, in dem das Signal zylinderselektiv ausgewertet wird.

Es ergibt sich folgende Funktionsweise:

Während des Betriebes der Brennkraftmaschine 1 öffnen im entsprechenden Rhythmus die den zugehörigen Zylinder 3 zugeordneten Auslaßventile. Dieses hat zur Folge, daß der jeweils durch die Verbrennung entstandene Druckunterschied zwischen dem entsprechenden Brennraum und dem stromab des Auslaßventiles gelegenen Bereich zu einem Druckstoß führt, der über den Auslaßkrümmer 4 und das Druckübertragungsrohr 8 zum Druckgradientenempfänger 10 geleitet und dort registriert wird. Sofern ein Zündaussetzer vorliegt, oder aber keine Verbrennung erfolgt, entfällt die zuvor beschriebene Druckwelle, so daß der Druckgradientenempfänger 10 kein entsprechendes Signal erhält.

Das Ausbleiben eines derartigen Signales wird von der Auswerteschaltung 12 registriert, die dann gegebenenfalls Maßnahmen ergreift. So ist es beispielsweise möglich die Kraftstoffzufuhr zur Brennkraftmaschine 1 zu unterbrechen.

Durch die kurbel- oder nockenwellensynchrone Abfrage des Druckgradientenempfängers 10 im Zeitintervall des jeweils öffnenden Auslaßventiles kann über die Zählschaltung der Auswerteschaltung 12 jeder einzelne Zylinder 3 identifiziert werden, so daß bei der Erfassung einer Störung der jeweils betroffene Zylinder erkannt wird. Demgemäß ist es möglich, ein den jeweiligen Zylinder identifizierendes Kontrollsignal abzugeben oder es kann beispielsweise der betroffene Zylinder durch Unterbrechung der Einspritzung oder dergleichen abgeschaltet werden.

## Ansprüche

1. Vorrichtung zur Erkennung von Zündaussetzern an Brennkraftmaschinen, insbesondere Otto-Motoren, mit einem die Zündaussetzer erfassenden Detektor, der an eine Auswerteschaltung angeschlossen ist, **dadurch gekennzeichnet,** daß der Detektor (9) ein dem Auslaßventil jedes Zylinders (3) -in Strömungsrichtung gesehen - nachgeordneter Druckgradientenempfänger (10) ist.

2. Vorrichtung nach Anspruch 1, **dadurch gekennzeichnet,** daß der Druckgradientenempfänger (10) als Mikrophon ausgebildet ist.

3. Vorrichtung nach einem der vorhergehenden Ansprüche, **dadurch gekennzeichnet,** daß der Druckgradientenempfänger (10) dem Sammelrohr (6) eines Auslaßkrümmers (4) der Brennkraftmaschine (1) zugeordnet ist.

4. Vorrichtung nach einem der vorhergehenden Ansprüche, **gekennzeichnet durch** ein Druckübertragungsrohr (8), das einseitig mit dem Sammelrohr (6) des Auslaßkrümmers (4) verbunden ist und anderseitig zum Druckgradientenempfänger (10) führt.

5. Vorrichtung nach einem der vorhergehenden Ansprüche, **dadurch gekennzeichnet,** daß der Ausgang des Druckgradientenempfängers (10) kurbel- oder nockenwellensynchron im Zeitintervall des jeweils öffnenden Auslaßventils abgefragt wird.

6. Vorrichtung nach einem der vorhergehenden Ansprüche, **dadurch gekennzeichnet,** daß bei einer Mehrzylinderversion der Brennkraftmaschine (1) die Auswerteschaltung (12) eine Zählschaltung zur Identifizierung der einzelnen Zylinder (3) aufweist.

7. Vorrichtung nach einem der vorhergehenden Ansprüche, **dadurch gekennzeichnet,** daß die Auswerteschaltung (12) bei auftretenden Zündaussetzern bzw. Verbrennungsausfällen die Einspritzung, vorzugsweise des betroffenen Zylinders (3) abschaltet und/oder ein Kontrollsignal aktiviert.

R. 22456